# EUROPEAN PATENT APPLICATION

(11) **EP 2 610 035 A1**
(43) Date of publication of application: **03.07.2013**
(21) Application number: 11195774.2
(22) Date of filing: 27.12.2011
(51) Int. Cl.: B25B 25/00

(54) **Wire tensioner and method for tensioning a wire**

(71) Applicant: Hultafors Group AB, 517 21 Bollebygd (SE)
(72) Inventor: Andersson, Göran, 504 57 BORÅS (SE); Wetterheim, Janarne, 564 34 BANKERYD (SE)
(74) Representative: Somlo, Tommy

(57) **Abstract**

A wire tensioner (400) adapted to fixate a wire (116) to a tool (202), wherein the wire tensioner (400) comprises a tensioning means (407); an insert portion (402) arranged to maintain a first wire portion (118) of the wire (116) in a fixed position relative to the insert portion (402), from which position the wire (116) extends around said tool (202) and returned into and through said insert portion (402) to said tensioning means (407), wherein said tensioning means (407) is arranged to tension the wire (116) when said first wire portion (116) is maintained by said insert portion (402), so that a second wire portion (120) of the returned wire is arranged in said insert portion (402); and fixating means (420) adapted to fixate the relative distance between the first (118) and second (120) wire portions.

## Description

### Field of the Invention

The present invention relates to the field of tools, and more specifically to a wire tensioner arranged to tension a wire around a tool. The present invention also relates to a corresponding method for tensioning the wire around the tool.

### Background of the Invention

When working at a building construction site, production site or the like, it is important to securely attach the tools that are being used or is to be used, such that they do not accidentally fall to the ground. This may be important when, for example, working at a high altitude, or relatively high altitude, such as the roof of a building, a bridge construction site, or at locations where an accidental drop of a tool might cause injury to persons passing the construction site. The tools may thus be equipped with a tool connecting device which in turn may be attached to the body of the person using them, or to a surrounding object, such as a fence, wire, rail, etc. in order to prevent the tools from accidentally falling to the ground.

Furthermore, these tool connecting devices need to be securely fixated to e.g. the handles of the tool to be secured. There is hence a need for a device for fixating the tool connecting devices to the tools. In order for the construction worker or the like to fixate the tool connecting device to the tool, it may hence be an important aspect that the device for fixating the tool connecting device to the tools is easy and convenient to handle, so that the construction worker does not neglect to provide the tool connecting device to the tool.

### Summary of the Invention

The present invention is based on the insight that a wire tensioner may be arranged which is adapted to tighten a wire around a tool and fixate the wire such that the wire is securely fixated around the tool. Hereby, the wire tensioner may connect e.g. a tool connecting device in such a manner that it is sufficiently fixated to the tool to be secured. Also, the wire tensioner may thus be easy and convenient to handle and can be arranged in a size making it portable such that it can be provided to e.g. the construction site, the production site or the like.

According to a first aspect of the present invention, a wire tensioner is provided. The wire tensioner comprises a tensioning means, an insert portion arranged to maintain a first wire portion of the wire in a fixed position relative to the insert portion, from which position the wire extends around the tool and returned into and through the insert portion to the tensioning means, wherein the tensioning means is arranged to tension the wire when the first wire portion is maintained by the insert portion, so that a second wire portion of the returned wire is arranged in the insert portion; and fixating means adapted to fixate the relative distance between the first and second wire portions.

The wording "tensioning" should be understood to mean that the wire is extended in relation to its original configuration, i.e. the wire is exposed to elongation by a tension load. The tensioning means is thus e.g. a device or portion of the wire tensioner that executes the tensioning of the wire. Moreover, the first wire portion may be maintained by the insert portion in a number of ways, for example by a screw joint connection, a clip connection in which a male or female portion of the insert portion connects to a corresponding female or male portion connected to the first wire portion, etc. Other means for maintaining the first wire portion by the insert portion are of course also conceivable, for example, the first wire portion may be fixated to a housing which in turn is maintained by the insert portion as will be described further below. Thus, the wire may be in direct or indirect fixation to the insert portion.

Furthermore, the fixating means which is adapted to fixate the relative distance between the first and second wire portions may be configured in a variety of formations and/or configurations. For example, the relative distance between the first and second wire portions may be fixated by fixating the wire portions to each other by, for example, welding, gluing, nailing, crimping a cover over the two wire portions, twisting the first and second wire portions around each other, etc. Moreover, the first and second wire portions may be located spaced apart from each other and fixated to e.g. a housing, which will be described later on, or may be located in connection to each other, i.e. adjacent to each other, within or at the surface of the housing.

Moreover, the wire may be provided in many different forms, such as a cable, a strap, metallic wire, etc. The present invention is hence not limited to the use of a specific type of wire, although it may be an important aspect that the material used in the wire is susceptible for being tensioned, such that the wire can be securely and tightly fixated around the tool to be secured. Such material may, for example, be steel, aluminum, copper, leather, textile, plastic etc. The wire may hence be chosen depending on, for example, the specific tool to be secured or the choice of material of the tool connecting device that is being used.

An advantage of having a wire tensioner which not just holds the wire at position in the insert portion, but is also arranged to tighten the wire around a tool and fixate the relative distance between the first and second wire portions is, for example, that an assembling device is provided which is relatively easy to handle and may be utilized for securely and tightly fixating a wire around almost any object that may be in need of such fixation, for example tools that may need to be connected with some sort of security arrangement or the like. Hence, the wire tensioner may be suitable for mobile purposes, i.e. it may be convenient to bring it to different construction sites or the like, as the wire tensioner itself can, as mentioned above, be used to both hold the wire in position as well as tighten the wire around the tool to be secured and thereafter fixating the relative distance between the first and second wire portions.

Furthermore, by using a tensioning means, the wire may be tighten around e.g. the tool to such an amount which may be practically impossible by use of hand power without utilizing a tool. Still further, according to an embodiment, the wire tensioner may be equipped with a strain gauge or the like, so that a suitable controlled amount of tensioning is provided to the wire around the object to be fixated. This may be advantageous since different objects to be provided with the tensioned wire may be susceptible to different amount of tensioning in the wire. The choice of material in the wire may also be a parameter to take into account when deciding on the amount of tensioning in the wire.

According to at least one example embodiment, the insert portion may be arranged to receive a housing of a wire-equipped connecting device, wherein the first wire portion may be fixated to the housing.

Hereby, the wire tensioner may be designated to a certain wire-equipped connecting device or more specifically, a certain housing of the wire-equipped connecting device. Also, an advantage of providing a wire-equipped connecting device having a housing may be that a further improvement in fixating the relative distance between the first and second wire portions may be provided. According to at least one example, the first wire portion may be fixated to the housing at a first position before the insert portion receives the housing. When thereafter assembling and fixating the wire around the tool, the wire extends from the first position where the first wire portion is fixated to the housing, around the tool to be fixated and back into the housing at a second position of the housing. The wire is thereafter further arranged through the housing and connected to the tension means which tensions the wire around the tool to a suitable amount of tensioning. Thereafter, the portion of the wire which is located at the second position of the housing is fixated to the housing. Hereby, the wire is fixated to the housing at the first and second positions of the housing. Moreover, the fixation of the two wire portions may not necessarily be executed in the same way. For example, the first wire portion may be welded, glued, nailed, etc, while the second wire portion may be fixated to the housing be means of e.g. providing an embossment in the housing, which will be described further below. It should however be noted that other fixating procedures are conceivable and that the first and second wire portion may be fixated to the housing with the same fixating procedure.

Furthermore, providing a housing to the insert portion may further simplify the wire assembling when fixating the relative distance between the wire portions, since the housing may be used as a guide for the returned wire portion. Hence, the housing may fixate the first wire portion, thereby holding it securely in its position, as well as be used as a guide for the returned wire portion before the wire is tightened and the relative distance between the first and second wire portions is fixated.

Still further, another advantage of providing a housing to the wire-equipped connecting device is that further external objects may be attached to the housing. For example, the housing may be connected to a safety arrangement, such as a carbine hook or the like, which in turn may be connected to e.g. a safety belt of a user of the tool. Hereby, a wire-equipped connecting device may be provided which is easy to handle and which can be attached to a safety arrangement in a smooth and convenient manner.

According to at least one example embodiment, the insert portion may comprise the fixating means.

The fixating means may thus be located at the insert portion, or in other words, the fixating means may be a part of the insert portion. Hereby, a reduction of size of the wire-tensioner may be provided, since the fixating means is provided at the approximately same position as the insert portion, thus two objects of the wire tensioner may be positioned together.

According to at least one example embodiment, the tensioning means may comprise a wire gripping portion arranged to grip the wire to the tensioning means.

The wire gripping portion may be configured and formed in a number of ways. For example, the wire gripping portion may be a screw which is arranged to provide a screw fit connection between the wire and the tensioning means, i.e. the screw is tightened on a portion of the wire which in turn abuts a counteracting portion of the tensioning means located at an opposite side of the wire compared to the screw. Thereafter, the wire may be tensioned having a relatively secure grip to the tensioning means. Other configurations are of course conceivable, such as a ball or the like which is arranged to abut to a portion of the wire and to a portion of the tensioning means. The portion of the tensioning means may in this example have a tapered form, such that when the wire is tensioned, the ball or the like is compressed against the tapered portion of the tensioning means and thus also on the wire, which in turn is gripped to the tensioning means.

According to at least one example embodiment, the tensioning means may further comprise an actuator coupled to the wire gripping portion and arranged to move the wire gripping portion away from the insert portion, so that the wire is tensioned.

The actuator may, for example, be a manually operated device which, by use of the hand, tensions the wire, which may be accomplished by providing a rotary movement to the actuator such that a translation movement is provided to the tensioning means, thereby moving the tensioning means away from the insert portion. According to another example embodiment, the actuator may be a gear wheel and the tensioning means may thus be a gear rack which meshes with the gear wheel to provide the movement away from the insert portion. According to yet another example embodiment, the tensioning means may be provided as a hydraulic piston having an automated electrical actuator which is controlled by an electrical switch or the like. Furthermore, a strain gauge or the like may be connected to the actuator in order to control the amount of tension provided to the wire when moving the wire gripping portion away from the insert portion.

According to at least one example embodiment, the wire gripping portion may be coupled to the actuator by means of a thread connection.

Hereby, when the actuator is operated, i.e. when the wire is tensioned, the wire gripping portion is moved away from the insert portion by means of the thread connection.

According to at least one example embodiment, the wire may be arranged to be connected to the wire gripping portion through a channel in the insert portion.

The channel may be a recess or groove in the insert portion or it may be a through-hole arranged in the insert portion. Furthermore, the recess, groove or through-hole may extend in a straight direction or in a curved shaped direction within the insert portion. An advantage of providing a channel through the insert portion is, at least, that a relatively secure insertion of the wire to the gripping portion is provided, i.e. the wire will, when providing it through the channel, be located at the gripping portion. The wire may hence be in close contact with the insert portion and be relatively securely arranged to the wire gripping portion before tensioned.

According to at least one example embodiment, the fixating means may be arranged to provide an embossment in the housing to fixate the tensioned wire to the housing.

Hereby, a relatively simple procedure is arranged for fixating the wire to the housing. The embossment may be executed in a number of different configurations, for example, by providing a fixating means which provides a stamp or punch in the housing so that the housing is deformed in the area where the wire portion is located. Furthermore, the embossment may also be provided by arranging a threaded screw connection to the insert portion which, when screwed, provides the embossment in the housing by means of a ball or the like arranged between the screw and the housing where the wire portion is located, so that the wire portion is fixated to the housing. The relative distance between the first and second wire portions are, in other words, fixated. This configuration will be described further below. Moreover, in order to be able to provide an embossment in the housing to provide a deformation of the housing so the wire is fixated, the housing may be made of a material which is susceptible for such an operation. Examples of such housing materials, by which the invention is not limited to, are aluminum, steel, copper, brass, plastic, etc.

According to at least one example embodiment, the fixating means may comprise a threaded screw member for providing the embossment.

A threaded screw member is relatively simple in its design and may provide an embossment to the housing by a simple screw arrangement. The screw member may be susceptible for an Allen key, an electrical screw driver, a manual screw driver, etc. in order to provide the embossment in the housing. Hereby, the embossment may be provided to the housing by means of a relatively simple procedure which can be executed by a construction worker or the like at the construction- or production site, etc.

According to at least one example embodiment, the wire tensioner may be a hand-held wire tensioner.

A hand-held wire tensioner is, as also described above in relation to the threaded screw member, convenient when providing it at a construction site or the like. Hereby, if the construction worker or the like is in need of e.g. a connecting device to his/her tool, he/she can then use the hand-held wire tensioner at site and relatively easily fixate the connecting device to the tool.

According to a second aspect of the present invention, a method for tensioning a wire around a tool is provided. The method comprising the steps of: fixating a first wire portion of the wire relative to an insert portion of a wire tensioner, providing the wire around a tool and returning the wire into and through the insert portion to a tensioning means, tensioning the wire around the tool so that a second wire portion of the returned wire is arranged in the insert portion, and fixating the relative distance between the first and second wire portions.

Advantages of this second aspect are largely analogous to those described in relation to the first aspect, i.e. that a wire tensioner is provided which tensions a wire around a tool and fixates the relative distance between the first and second wire portions. Also, the method may be executed by the user at site which makes it possible for him/her to decide which tools that is in need of being secured and to which amount the wire should be tensioned before fixating the relative distance between the first and second wire portions. However, the method may also be executed at the tool manufacturing site, such that the tools are provided to the users with the connecting device connected thereto.

According to at least one example embodiment, the step of fixating the relative distance may comprise fixating the second wire portion to a housing already holding the first wire portion.

According to at least one example embodiment, the step of fixating the relative distance may be executed by providing an embossment in the housing. Other alternatives are of course also conceivable and are described above in relation to the first aspect.

According to at least one example embodiment, the method may further comprise the step of gripping the wire to a wire gripping portion of the wire tensioner. Embodiments of the wire gripping portion are similar to those described above in relation to the first aspect.

According to at least one example embodiment, the step of tensioning the wire may be executed by providing an external force to an actuator which is threaded to the wire gripping portion.

Other effects and features of this second aspect are largely analogous to those described above in relation to the first aspect of the present invention.

### Brief Description of the Drawings

The above, as well as additional objects, features and advantages of the present invention, will be better understood through the following illustrative and non-limiting detailed description of an exemplary embodiment of the present invention, with reference to the appended drawings, where the same reference numerals will be used for similar elements, wherein:
Figs. 1 a - 1 c illustrate perspective views of an example embodiment of the tool connecting device according to the present invention;
Figs. 2a - 2b illustrate perspective views of the example embodiment in Figs. 1 a - 1 c when being fixated to a tool;
Figs. 3a - 3b illustrate perspective views in more detail of the example embodiment of Figs. 2a - 2c where the wire is fixated to the housing of the tool connecting device;
Figs. 4a - 4b illustrate perspective views of an example embodiment of a wire tensioner;
Figs. 5a - 5b illustrates perspective views of the example embodiment of Figs. 4a - 4b when fixating the tool connecting device to a tool by use the wire tensioner;
Fig. 6 illustrates a cross-sectional view of the housing according to an example embodiment of the present invention;
Figs. 7 - 9 illustrate further example embodiments of the tool connecting device according to the present invention; and
Fig. 10 illustrates a further example embodiment of a wire tensioner.

### Detailed Description of Exemplary Embodiments of the Invention

The present invention will now be described more fully hereinafter with reference to the accompanying drawings, in which an exemplary embodiment of the invention is shown. This invention may, however, be embodied in many different forms and should not be construed as limited to the embodiment set forth herein; rather, this embodiment is provided for thoroughness and completeness. Like reference character refer to like elements throughout the description.

In the following description, the present invention is described with reference to a wire tensioner 400 which is arranged to tension a wire 116 of e.g. a wire-equipped tool connecting device 100. Firstly, a detailed description will be provided for an example embodiment of a tool connecting device 100 arranged to be fixated to a tool 202. Secondly, a detailed description will be provided for the wire tensioner 400 which, according to an example embodiment, is arranged to tension the wire 116 of the tool connecting device 100.

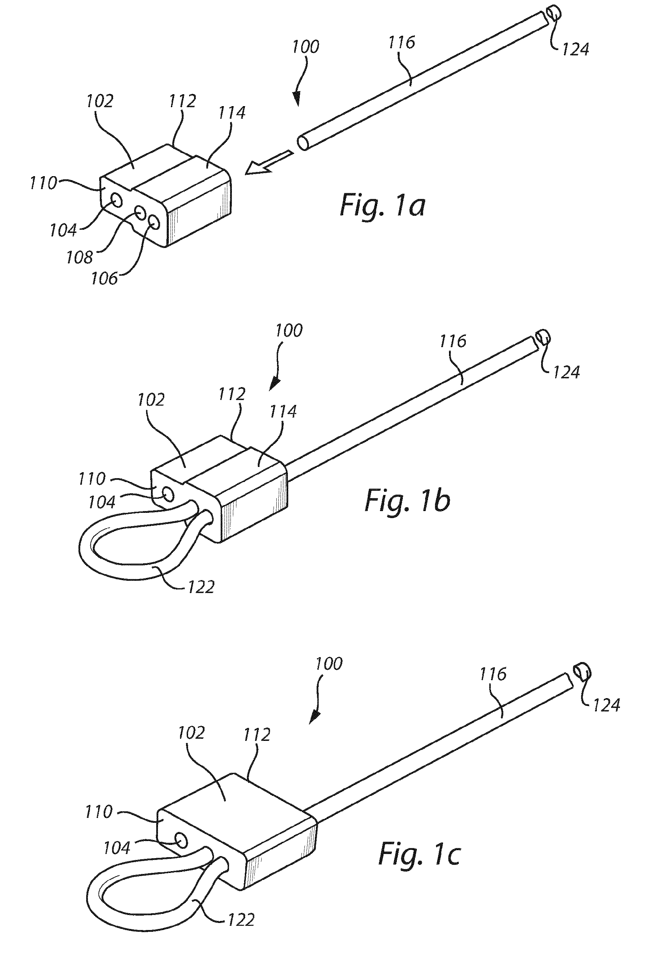

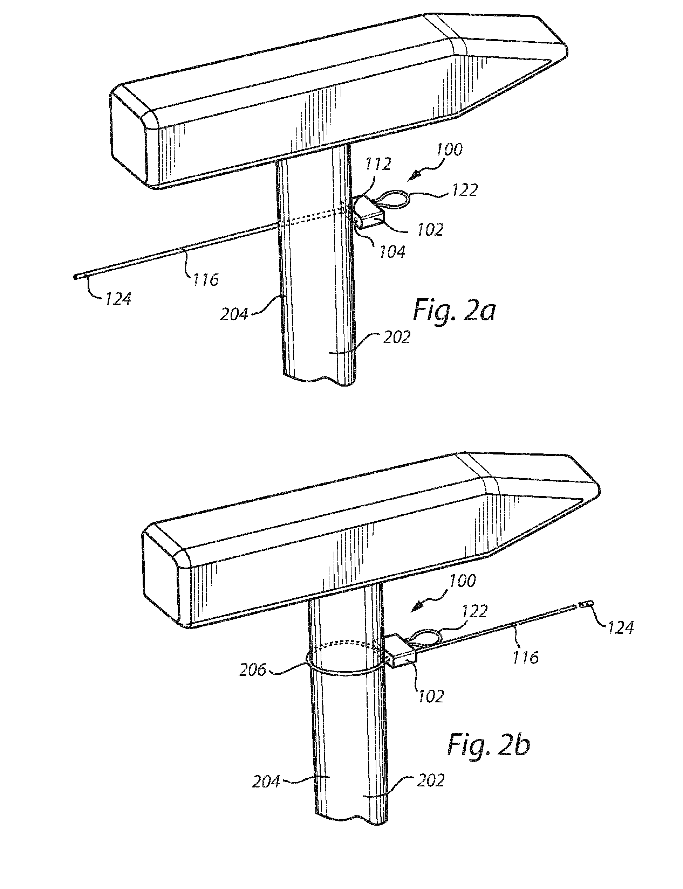

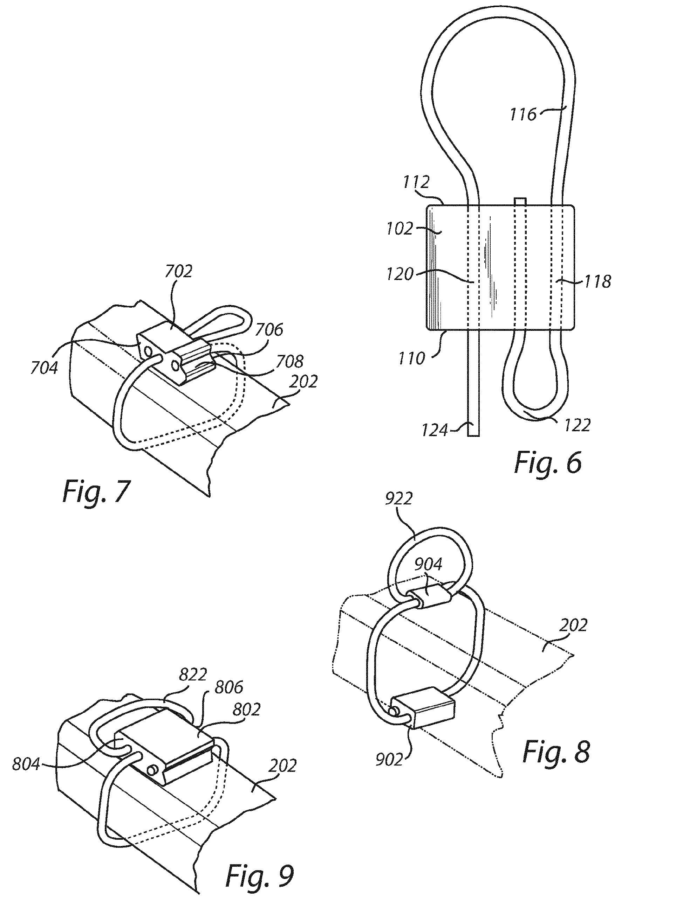

Reference is now made in particular to Figs. 1a - 2b illustrating an example embodiment of a tool connecting device 100 which is arranged to be fixated to a tool 202, illustrated in Figs. 2a - 2b as a hammer. Moreover, the tool connecting device 100 comprises a housing 102, here illustrated as having a first 104, second 106 and third 108 channel in the form of through-holes, which are spaced apart from each other. The channels 104, 106, 108 may, however, also be arranged as e.g. recesses or grooves on at least one of the surfaces of the housing 102. Furthermore, the channels 104, 106, 108 extend, in the illustrated example embodiment, in a straight direction from a first side 110 to an oppositely located second side 112 of the housing 102. The channels 104, 106, 108 may, however, also be configured to extend in a direction from one of the other sides of the housing 102 to either one of the first 110 and/or second 112 sides. Furthermore, the housing 102 also comprises, in the illustrated example embodiment, a protruding portion 114. This protruding portion 114 of the housing 102 is arranged to be pressed in order to fixate a first wire portion 118 (see Fig. 6) of the wire 116 which will be described in further detail below. The housing 102 may hence be made of a material which is susceptible for such a pressing operation. Example of housing material is thus aluminum, different types of plastic, steel, copper, brass, etc.

Moreover, as mentioned above, the tool connecting device 100 further comprises a wire 116. The wire has a first 118 and second 120 wire portion, which is best illustrated in Fig. 6, where the first wire portion 118, in the illustrated example embodiment, is arranged to be fixated to the second 106 channel of the housing 102 and the second wire portion 120 is in an assembled configuration arranged to be fixated to the first channel 104 of the housing 102. Moreover, the wire 116 further comprises a free end portion 124 which is configured to be provided around the tool 202 to be secured and thereafter arranged through the first channel 104 of the housing when being assembled, as will be described further below. Furthermore, the wire 116 also extends through the second channel 106, where the first wire portion 118 is fixated, and out from the first side 110 of the housing 102 making a loop and thereafter provided into the third channel 108, thus forming a loop-like connecting portion 122. Still further, the protruding portion 114 of the housing 102 is in the illustrated example embodiment, when the wire 116 is arranged through the second 106 and third 108 channels, pressed such that the wire 116 is securely fixated within the channels 106, 108, and the protruding portion 114 is thus approximately aligned with the non-protruding portion, which is clearly illustrated in Fig. 1c, thereby forming an assembled configuration of the tool connecting device 100 before it is fixated to the tool 202. It should however be noted that the wire 116 may be fixated to the second 106 and/or third 108 channels of the housing 102 by other means than being pressed. For example, the wire may be welded, glued, nailed, etc. Also, the entire protruding portion 114 does not necessarily has to pressed, it may just as well be sufficient to only press a part of the protruding portion 114 in order to obtain a secure fixation of the wire 116. Furthermore, although the drawings illustrate that the first wire portion 118 is fixated in the second channel 106 and the second wire portion 120 is fixated in the first channel 104, variations are conceivable. For instance, the first wire portion 118 may instead be fixated in the third channel 108, which is located between the first channel 104 and the second channel 106.

Still further, as illustrated in e.g. Figs. 1b - 1c, the tool connecting device 100 comprises the above mentioned connecting portion 122, here illustrated as a loop-like connecting portion. The connecting portion 122 is arranged to be connected to a suitable safety arrangement (not illustrated), such as a carbine hook, a safety belt, etc. The safety arrangement may in turn be connected or coupled to e.g. the belt of a user, a surrounding fence or rail, etc. in order to securely attach the tool connecting device 100, and hence the tool 202, and to prevent the tool 202 from accidentally being dropped to the ground during work.

Although the connecting portion 122 is illustrated in the figures as being a part of the wire 116, other alternatives are of course also conceivable. The connecting portion 122 may, for example, be a male- of female clip connection which is adapted to connect to a corresponding female- or male connection of e.g. the user's safety belt or the like. It may also be in the form of a strap having e.g. a threaded component or the like at its free end which is arranged to be screwed to a corresponding component attached to the user's safety belt or the like. In the two last mentioned examples, the connecting portion 122 can, but does not necessarily have to be fixated to the third channel 108 of the housing 102.

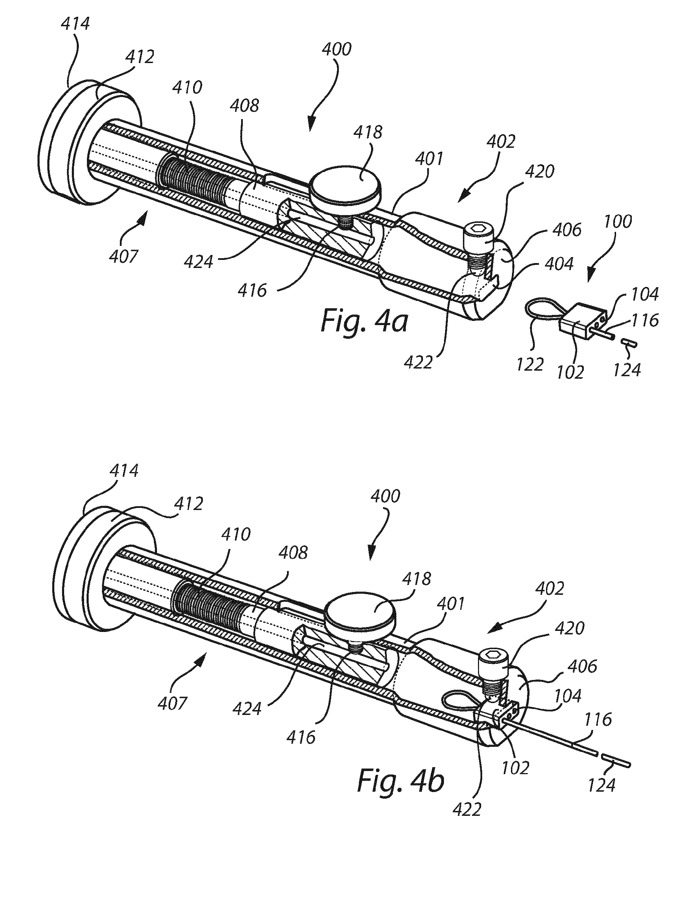

In order to describe the wire tensioner 400 in more detail, reference is now made in particular to Figs. 4a - 4b, illustrating partly cross-sectional perspective views of the wire tensioner 400 which is arranged to tension a wire around a tool 202. The wire tensioner 400 is preferably a hand-held wire tensioner and is in particular arranged to tension the wire 116 of the above described tool connecting device 100, although the wire tensioner 400 in other configurations and embodiments not illustrated here may be able to tension and fixate e.g. only a wire around a tool without having a housing to be connected to.

The wire tensioner 400 comprises, in the illustrated example embodiment of Figs. 4a - 4b, a tube shaped casing 401 having an insert portion 402 which comprises an opening 404 located at a front side 406 of the wire tensioner 400 and which is arranged to receive a housing 102 of e.g. a wire-equipped tool connecting device 100. Moreover, the insert portion 402 also comprises a fixating means 420. The fixating means 420 comprises, in the illustrated example embodiment, a threaded screw having its screw head on the exterior of the tube shaped casing 401. The screw head may be susceptible for e.g. an Allen key, a screw driver, or the like. Furthermore, a ball-like portion 422 is arranged at the bottom part of the fixating means 420. The ball-like portion 422 is arranged to hold the housing 102 of the wire-equipped tool connecting device 100 at position within the insert portion 402 and, which will be describe further below, to provide an embossment to the housing 102 such that the second wire portion 120 is fixated to the housing in the first channel 104.

Furthermore, the wire tensioner 400 also comprises a tensioning means 407. The tensioning means 407 comprises a rod 408, a wire gripping portion 416 and an actuator 412 located at the rear end 414 of the wire tensioner 400. Moreover, the rod 408 comprises external threads 410 at a rear side thereof which are arranged to mesh with internal threads (not shown) of the actuator 412. Also, the wire gripping portion 416 of the tensioning means 407 is, in the illustrated example embodiment, coupled to the rod 408 by means of a thread connection such that a screw or the like can be provided to a channel 424, here illustrated as a through-hole or bore located within the rod 408. A user of the wire tensioner 400 may thus, in order to tension the wire 116, provide the wire 116 through the channel 424 in the rod 408, grip the wire 116 between the channel 424 and the wire gripping portion 416 by operating a handle 418, located at the exterior of the casing 401, of the wire gripping portion 416 so that the wire 116 is fixated to the rod 408. Thereafter, by executing a screw-like operation to the actuator 412, moving the tensioning means 407 away from the insert portion 402 and hence tension the wire. Although the wire gripping portion 416 is illustrated as a manually operated component, it may just as well be an automated component having electrical components such that a user of the wire tensioner 400 only needs to push a button or the like to grip the wire 116 to the rod 408 of the tensioning means 407.

The invention will now be described in more detail with reference to a method for tightening the wire 116 of the tool connecting device 100 using the above mentioned wire tensioner 400. Reference will be made mainly to Figs. 4a - 5b, illustrating the method by using the wire tensioner 400.

When tensioning the wire around the tool 202, the first wire portion 118 is fixated to the second channel 106 of the housing 102 as described above. Thereafter, the housing 102 and the e.g. loop-like connecting portion 122 is positioned within the insert portion 402 of the housing 102, i.e. the first side 110 of the housing 102 is facing the wire tensioner 400 before arranging the housing 102 into the insert portion 402. Furthermore, the housing 102 is connected to the insert portion 402 in such a way that it is more or less fixated to the insert portion 402. This may be executed by, for example, a clip- or snap connection such that the housing 102 is e.g. snapped into the insert portion 402 to securely hold the housing 102 in position. It may also, as illustrated in the example embodiment of e.g. Fig. 4b, be executed by tightening the screw of the fixating means 420 onto the surface of the housing 102 to such an amount that the housing 102 is held in position without being deformed.

Moreover, the free end portion 124 of the wire 116 is thereafter provided around the tool 202 to be secured. The free end portion 124 of the wire 116 is hence arranged around the tool 202 and thereafter returned, according to the example embodiment, through the first channel 104 of the housing 102 which is also provided in the insert portion 402 of the wire tensioner 400. The free end portion 124 of the wire 116 is further provided through the insert portion 402 and into the rod 408 of the tensioning means 407, or more specifically, into the channel 424 located, in the illustrated example embodiment, within the rod 408 of the tensioning means 407. When the wire 116 has been provided into the wire tensioner 400 to a sufficient amount, the wire gripping portion 418 is, by means of the screw connection, fixating the wire 116 to the rod 408 in the channel 424. The screw connection of the wire gripping portion 418 is hence tightened on a portion of the wire 116 which in turn abuts on a counteracting portion of the channel 424 to fixate the wire 116 to the rod 408. In the illustrated embodiment of e.g. Figs. 4a - 5b the wire is, when provided through the rod 408, adapted to be provided out from the rod 408, via the channel 424, at the rear end 414 of the wire tensioner 400. However, the wire may just as well be provided out from the rod 408 and through the casing 401 at a position located after the wire gripping portion 418. In such a case, the channel 424 may thus be formed in a curve-shape such that the wire is led out at the surface of the casing 401.

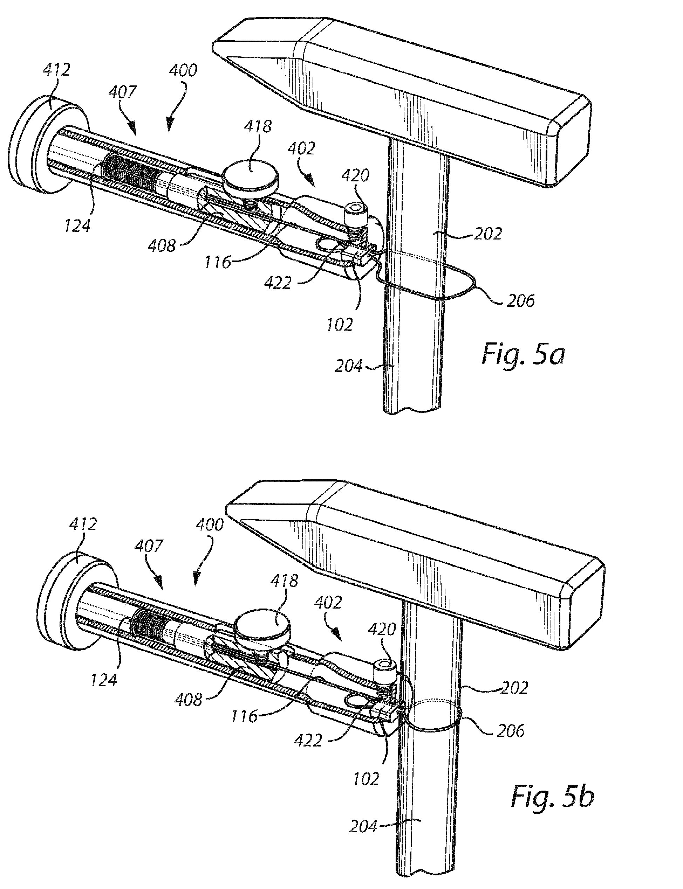

Furthermore, when the tool connecting device 100 has been assembled in the wire tensioner 400 as described above, and best seen in Fig. 5a, the wire 116 is tensioned and tightened around the tool 202. This may be accomplished, according to the example embodiment illustrated in Fig. 5a and 5b, by providing a rotary movement to the actuator 412 of the tensioning means 407 such that a translation movement is provided to the rod 408. Hereby, the wire gripping portion 418 is moved away from the insert portion 402 where the first wire portion 118 is fixated. The wire 116 is hence tightened around the tool 202 as illustrated in Fig. 5b. Thereafter, by tightening the screw of the fixating means 420, the ball-like portion 422 arranged at the bottom part of the fixating means 420 provides an embossment 208 in the housing so that the second wire portion 120 is fixated to the first channel 104 of the housing 102. However, the fixation of the second wire portion 120 to the first channel 104 of the housing 102 may in another example embodiment also be provided by e.g. welding, nailing, crimping, etc.

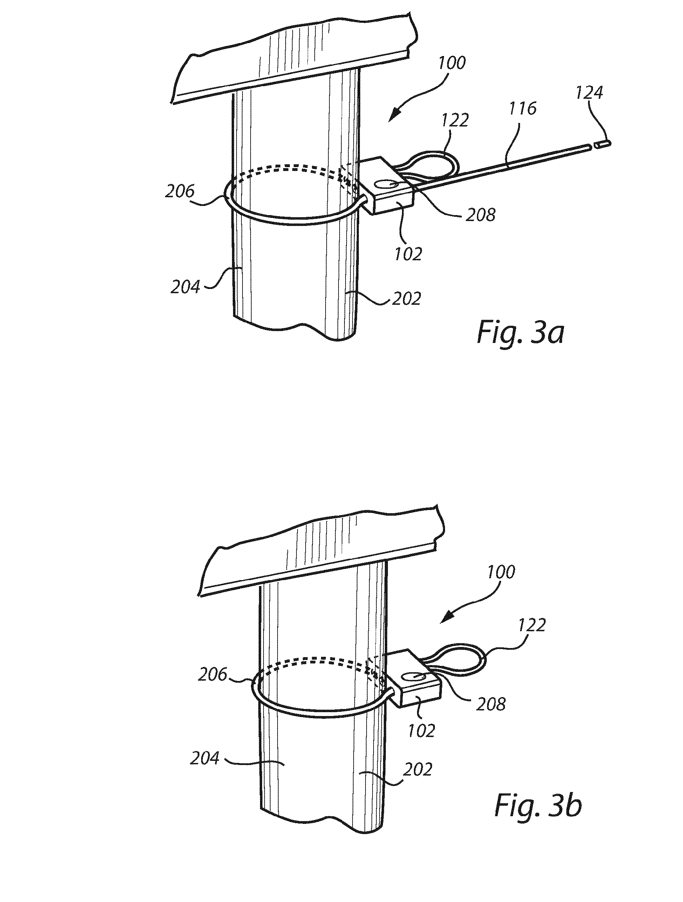

Finally, when the embossment 208 is provided to the housing 102, the wire tensioner 400 can be removed, i.e. the wire gripping portion 418 is released from the wire 116 and the insert portion 402 is removed from the housing 102, thereby providing the tool connecting device 100 in the configuration as illustrated in Fig. 3a. The wire may then be cut off by using any suitable tool and the tool connecting device 100 is then configured as illustrated in Fig. 3b.

Reference is now made to Figs. 7 - 9 illustrating further example embodiments of the tool connecting device according to the present invention. In Fig. 7 the housing 702 of the tool connecting device is arranged in a lying position in comparison with the housing 102 described in relation to e.g. Figs. 1a - 1c. Also, the wire 116 is, contrary to e.g. Figs. 1a - 1c, extending from a first side 704 of the housing 702, around the tool 202 to be secured, and into the housing 702 at the second side 706 of the housing. Also, the embossment 708 for fixating the wire to the housing is provided differently compared to the embossment in the housing illustrated in e.g. Figs. 3a - 3b.

The housing in Fig. 8 is, as for the embodiment illustrated in Fig. 7, positioned in a lying configuration. The main difference between the embodiment depicted in Fig. 8 and the previously described embodiments is that the connecting portion 822 is arranged by the wire and extending in a direction from the first side 804 of the housing 802 to the second side 806 of the housing 802.

Finally, the embodiment depicted in Fig. 9 comprises a housing 902 having two channels, here illustrated as through-holes. Also, the connecting portion 922 is formed by the wire and having an element 904 for holding the connecting portion in position located at an approximately opposite side of the tool 202 compared to the housing 902 of the tool connecting device. Hereby, the connecting portion 922 is in indirect connection to the housing 902. The element 904 may also be a strap, weld or other suitable attachment means for holding the connecting portion 922 in position. Still further, the connecting portion does not necessarily have be formed by the same wire as fixated around the tool, the connecting portion 922 may just as well be a separate wire fixated to the element.

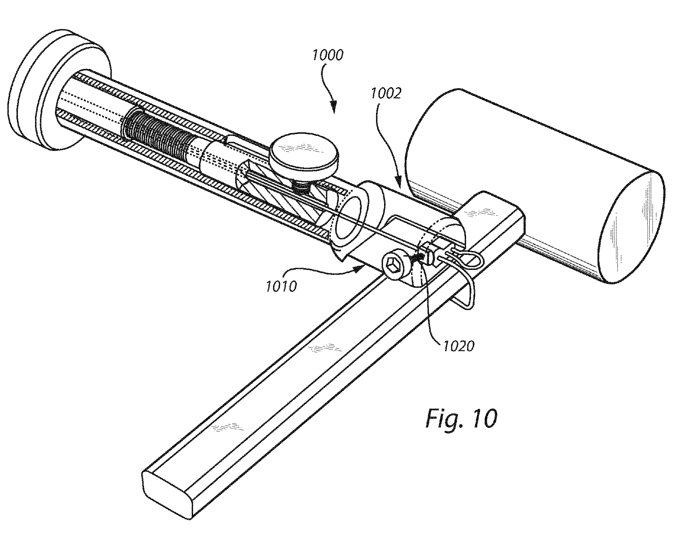

Reference in now made to Fig. 10 which illustrates a further embodiment of the wire tensioner 1000. The differences between the wire tensioner 1000 in Fig. 10 and the wire tensioner 400 illustrated in e.g. Figs. 4a - 4b is mainly focused to the insert portion 1002 and the fixating means 1020. As is illustrated in Fig. 10, the fixating means 1020 is positioned on the side of the insert portion 1002 instead of on the top as illustrated in e.g. Figs 4a - 4b. Also, the insert portion 1002 is provided with a generally plane surface 1010 which is arranged to, when the wire is to be fixated around a tool, "rest" against the tool to be secured with the tool connecting device. Also, the opening, to which the housing of the tool connecting device is provided, may have an opened configuration at the generally plane surface 1010, so that the wire which is to be provided around the tool to be secured can be provided out from the insert portion 1002. Furthermore, the exemplary embodiment depicted in Fig. 10 may be suitable, but not limited, to use for the exemplary embodiments of the tool connecting devices illustrated in Figs. 7 and 8.

Although one example embodiment of the present invention have been described herein, it should be apparent to those having ordinary skill in the art that a number of changes, modifications or alterations to the invention as described herein may be made. For example, the housing of the tool connecting device does not necessarily have to comprise three channels, two channels may also be sufficient, whereby the loop-like connecting portion is fixated only to one channel instead of two. Also, the wire gripping portion may instead of a screw connection be configured with one or more balls. The channel of the rod may thus be in a tapered form, so that when the rod is moved away from the insert portion, the ball(s) are gripped between the tapered channel and the wire so that the wire is securely gripped to the rod. Furthermore, the rod may be provided as a gear rack which is arranged to mesh with a gear wheel forming the actuator, instead of the above described threaded components. According to another embodiment, the tensioning means may also be provided as a hydraulic piston which is arranged to move the rod away from the insert portion when tensioning the wire.

Still further, although the tool connecting device is illustrated as being fixated to a hammer, it is readily understood that the tool connecting device is configured to be fixated to approximately any tool in need of being secured. The tool connecting device should hence be considered as a tool-independent device.

Thus, the above description of the example embodiment of the present invention and the accompanying drawings are to be regarded as a non-limiting example of the invention and the scope of protection is defined by the appended claims. Any reference sign in the claims should not be construed as limiting the scope.

## Claims

1. A wire tensioner (400) adapted to fixate a wire (116) to a tool (202), wherein the wire tensioner (400) comprises
a tensioning means (407);
an insert portion (402) arranged to maintain a first wire portion (118) of the wire (116) in a fixed position relative to the insert portion (402), from which position the wire (116) extends around said tool (202) and returned into and through said insert portion (402) to said tensioning means (407), wherein said tensioning means (407) is arranged to tension the wire (116) when said first wire portion (118) is maintained by said insert portion (402), so that a second wire portion (120) of the returned wire is arranged in said insert portion (402); and
fixating means (420) adapted to fixate the relative distance between the first (118) and second (120) wire portions.

2. A wire tensioner (400) as claimed in claim 1, wherein said insert portion (402) is arranged to receive a housing (102) of a wire-equipped connecting device (100), wherein said first wire portion (116) is fixated to said housing (102).

3. A wire tensioner (400) as claimed in claim 1 or 2, wherein said insert portion (402) comprises said fixating means (420).

4. A wire tensioner (400) as claimed in any one of the preceding claims, wherein said tensioning means (407) comprises a wire gripping portion (416) arranged to grip said wire (116) to said tensioning means (407).

5. A wire tensioner (400) as claimed in claim 4, wherein said tensioning means (407) further comprises an actuator (412) coupled to said wire gripping portion (416) and arranged to move said wire gripping portion (416) away from said insert portion (402), so that said wire (116) is tensioned.

6. A wire tensioner (400) as claimed in claim 5, wherein said wire gripping portion (416) is coupled to said actuator (412) by means of a thread connection.

7. A wire tensioner (400) as claimed in any one of claims 4 to 6, wherein said wire (116) is arranged to be connected to said wire gripping portion (416) through a channel in said insert portion (402).

8. A wire tensioner (400) as claimed in any one of claims 2 to 7, wherein said fixating means (420) is adapted to provide an embossment (208) in said housing (102) to fixate said tensioned wire to said housing (102).

9. A wire tensioner (400) as claimed in claim 8, wherein the fixating means (420) comprises a threaded screw member for providing said embossment (208).

10. A wire tensioner (400) as claimed in any one of the preceding claims, wherein said wire tensioner (400) is a hand-held wire tensioner.

11. A method for tensioning a wire (116) around a tool (202), the method comprising the steps of:
- fixating a first wire portion (118) of the wire (116) relative to an insert portion (402) of a wire tensioner (400);
- providing the wire (116) around said tool (202) and returning said wire (116) into and through said insert portion (402) to a tensioning means (407);
- tensioning the wire (116) around the tool (202) so that a second wire portion (120) of the returned wire is arranged in said insert portion (402); and
- fixating the relative distance between the first (118) and second (120) wire portions.

12. A method as claimed in claim 11, wherein the step of fixating said relative distance comprises fixating the second wire portion (120) to a housing (102) already holding said first wire portion (118).

13. A method as claimed in claim 12, wherein the step of fixating said relative distance is executed by providing an embossment (208) in said housing (102).

14. A method as claimed in any one of claims 11 to 13, further comprising the step of gripping said wire (116) to a wire gripping portion (416) of said wire tensioner (400).

15. A method as claimed in any one of claims 11 to 14, wherein the wire tensioner (400) is the wire tensioner as claimed in any one of claims 1 - 10.
